# EUROPEAN PATENT APPLICATION

(11) **EP 2 997 828 A1**
(43) Date of publication of application: **23.03.2016**
(21) Application number: 14189448.5
(22) Date of filing: 17.10.2014
(51) Int. Cl.: A23C 19/09, A23L 17/60

(54) **Treatment of laminariales algae**

(30) Priority: 17.09.2014 EP 14185230
(71) Applicant: Busse-Uhrig, Claudia, 22559 Hamburg (DE); Monington West, Lothar, 22299 Hamburg (DE)
(72) Inventor: Logan, Cheryl, 29633 Munster (DE)
(74) Representative: UEXKÜLL & STOLBERG

(57) **Abstract**

The present invention relates to a method for the treatment of *Laminariales* alga, such as alga of the species Saccharina *latissima,* comprising mixing the alga with an aqueous solution comprising from 0.1 g/L to 50 g/L calcium salt and/or from 1 g/L to 500 g/L sodium chloride; incubating the mixture at a temperature of above 60°C; and cooling the alga to a temperature of from 10°C to 40°C. Further, the invention relates to a method for the manufacture of an alga-containing food product, comprising treating a *Laminariales* alga according to the invention; and adding the treated alga to a food product. Thereby, the invention also provides a food product comprising *Laminariales* alga, such as a food product obtainable with a method according to the invention.

## Description

The present invention relates to a method for the treatment of *Laminariales* alga, such as alga of the species *Saccharina latissima,* comprising mixing the alga with an aqueous solution comprising from 0.1 g/L to 50 g/L calcium salt and/or from 1 g/L to 500 g/L sodium chloride; incubating the mixture at a temperature of above 60°C; and cooling the alga to a temperature of from 10°C to 40°C. Further, the invention relates to a method for the manufacture of an alga-containing food product, comprising treating a *Laminariales* alga according to the invention; and adding the treated alga to a food product. Thereby, the invention also provides a food product comprising *Laminariales* alga, such as a food product obtainable with a method according to the invention.

### BACKGROUND

It has long been known that brown algae of the order *Laminariales,* such as the golden brown seaweeds *Saccharina latissima* and *Saccharina japonica,* are highly nutritious and can be used as a food supplement or food basis, in particular to complement a vegetarian diet. *Saccharina japonica* is, for example, used in Japanese "Kombu", e.g. for the manufacture of broths or to flavor different food products.

*Saccharina latissima,* such as other *Laminariales* algae, is known for its sweet flavor and is high in trace minerals, such as iodine, calcium, iron, zinc, and selenium, high in fibres and high in nutrients such as vitamins A, C, E and B12. *Inter alia* due to the high selenium and iodine content, the alga is an ideal food supplement in particular for vegetarians and vegans.

*Saccharina latissima* also has a low fat content and, in contrast to algae of other genera (such as the red algae *Porphyra yezoensis* and *Porphyra tenera* that are used for the manufacture of Sushi), *Saccharina latissima* shows a particularly low intake of harmful substances. Moreover, the alga is also easily digestible by humans and animals. It is said that the alga has a detoxifying influence on the human body (Seaweeds Kaiso: Bountiful Harvest from the seas, 2002, by Kazutosi Nisizawa). Due to these positive characteristics of *Laminariales* algae, such as *Saccharina latissima,* several attempts in the art have been made to incorporate the algae into different food products.

However, it has been proven difficult to manufacture processed food products, in particular food products that solidify during the manufacture (such as cheese), that contain stable, evenly distributed *Laminariales* alga. Without wanting to be bound by theory, this is most likely due to the surface properties of the *Laminariales* alga, for example due to the production of alginate. For instance, it has been found by the present inventors that fresh *Laminariales* alga, when added to cheese or vegetarian sausage products, will migrate to the surface of the product, thus, resulting in an irregular distribution of the algae.

Evidently, such an uneven distribution in the final food product has negative consequences for the marketability of the food product. Standardized taste and quality cannot be ensured in such a product. It, therefore, exists a need in the art for methods that ensure the stable and even incorporation of *Laminariales* algae, such as *Saccharina latissima,* into processed food products, such as cheese or vegetarian sausage.

### DESCRIPTION

The present invention provides a method of treating *Laminariales* algae, such as *Saccharina latissima,* before incorporating the algae into a food product, such as cheese or vegetarian sausages, which ensures the stable and even incorporation of said algae. In particular, it was found in the context of the present invention that the treatment of the algae with calcium salt and/or sodium chloride at certain temperatures changes the algae in a manner that ensures that the algae do no longer migrate through the food product to the surface of the product. The calcium salt preferably comprises a carbon-containing anion, such as a citrate or carbonate anion.

Thus, in a first aspect, the invention relates to a method for the treatment of a *Laminariales* alga, comprising a) mixing the alga with an aqueous solution comprising calcium salt and/or sodium chloride; b) incubating the mixture at a temperature of above 60°C; and c) cooling the alga to a temperature of from 10°C to 40°C. Preferably, the calcium salt comprises a carbon-containing anion, such as a citrate anion or carbonate anion. In one embodiment, the present invention provides a method for the treatment of a *Laminariales* alga, comprising a) mixing the alga with an aqueous solution comprising from 0.1 g/L to 50 g/L calcium salt and/or from 1 g/L to 500 g/L sodium chloride; b) incubating the mixture at a temperature of above 60°C; and c) cooling the alga to a temperature of from 10°C to 40°C. In a further preferred embodiment, the method for the treatment of a *Laminariales* alga comprises a) mixing the alga with an aqueous solution comprising from 1 g/L to 15 g/L calcium salt and/or from 10 g/L to 150 g/L sodium chloride; b) incubating the mixture at a temperature of above 70°C; and c) cooling the alga to a temperature of from 20°C to 30°C.

It is known that calcium citrate is particularly easy digestible. Therefore, in preferred embodiments, the calcium salt is calcium citrate. Provided is, thus, a method for the treatment of a *Laminariales* alga, comprising a) mixing the alga with an aqueous solution comprising calcium citrate and/or sodium chloride; b) incubating the mixture at a temperature of above 60°C; and c) cooling the alga to a temperature of from 10°C to 40°C. In one embodiment, the present invention provides a method for the treatment of a *Laminariales* alga, comprising a) mixing the alga with an aqueous solution comprising from 0.1 g/L to 50 g/L (about 0.2 mM to 100 mM) calcium citrate and/or from 1 g/L to 500 g/L sodium chloride; b) incubating the mixture at a temperature of above 60°C; and c) cooling the alga to a temperature of from 10°C to 40°C. In a further preferred embodiment, the method for the treatment of a *Laminariales* alga comprises a) mixing the alga with an aqueous solution comprising from 1 g/L to 15 g/L (about 2 mM to 30 mM) calcium citrate and/or from 10 g/L to 150 g/L sodium chloride; b) incubating the mixture at a temperature of above 70°C; and c) cooling the alga to a temperature of from 20°C to 30°C. In a particularly preferred embodiment, the method for the treatment of a *Laminariales* alga comprises a) mixing the alga with an aqueous solution comprising about 5 g/L (about 10 mM) calcium citrate and/or about 50 g/L sodium chloride; b) incubating the mixture at a temperature of from 78 to 82 °C; and c) cooling the alga to a temperature of about 25°C.

The methods may further optionally comprise, prior to step a), the steps of a1) heating the alga to a temperature of above 60°C in an aqueous solution; and/or a2) cooling the alga to a temperature of from 15°C to 45°C. In a preferred embodiment, the method for the treatment of a *Laminariales* alga, thus, comprises the steps a1) heating the alga to a temperature of above 60°C in an aqueous solution; a2) cooling the alga to a temperature of from 15°C to 45°C; a) mixing the alga with an aqueous solution comprising calcium salt and/or sodium chloride; b) incubating the mixture at a temperature of above 60°C; and c) cooling the alga to a temperature of from 10°C to 40°C. In a particular embodiment, the method for the treatment of a *Laminariales* alga, thus, comprises the steps a1) heating the alga to a temperature of above 60°C in an aqueous solution; a2) cooling the alga to a temperature of from 15°C to 45°C; a) mixing the alga with an aqueous solution comprising from 0.1 g/L to 50 g/L calcium salt and/or from 1 g/L to 500 g/L sodium chloride; b) incubating the mixture at a temperature of above 60°C; and c) cooling the alga to a temperature of from 10°C to 40°C. In a further preferred embodiment, the method for the treatment of a *Laminariales* alga comprises a1) optionally, heating the alga to a temperature of above 70°C in an aqueous solution; a2) optionally, cooling the alga to a temperature of from 20°C to 40°C; a) mixing the alga with an aqueous solution comprising from 1 g/L to 15 g/L calcium salt and/or from 10 g/L to 150 g/L sodium chloride; b) incubating the mixture at a temperature of above 70°C; and c) cooling the alga to a temperature of from 20°C to 30°C.

In preferred embodiments, in which the calcium salt is calcium citrate, the method for the treatment of a *Laminariales* alga comprises the steps a1) heating the alga to a temperature of above 60°C in an aqueous solution; a2) cooling the alga to a temperature of from 15°C to 45°C; a) mixing the alga with an aqueous solution comprising from 0.1 g/L to 50 g/L (about 0.2 mM to 100 mM) calcium citrate and/or from 1 g/L to 500 g/L sodium chloride; b) incubating the mixture at a temperature of above 60°C; and c) cooling the alga to a temperature of from 10°C to 40°C. In a further preferred embodiment, the method for the treatment of a *Laminariales* alga comprises a1) optionally, heating the alga to a temperature of above 70°C in an aqueous solution; a2) optionally, cooling the alga to a temperature of from 20°C to 40°C; a) mixing the alga with an aqueous solution comprising from 1 g/L to 15 g/L (about 2 mM to 30 mM calcium citrate and/or from 10 g/L to 150 g/L sodium chloride; b) incubating the mixture at a temperature of above 70°C; and c) cooling the alga to a temperature of from 20°C to 30°C. In a particularly preferred embodiment, the method for the treatment of a *Laminariales* alga comprises a1) optionally, heating the alga to a temperature of about 78°C in an aqueous solution; a2) optionally, cooling the alga to a temperature of about 30°C; a) mixing the alga with an aqueous solution comprising about 5 g/L calcium citrate (about 10 mM) and/or about 50 g/L sodium chloride; b) incubating the mixture at a temperature of from 78 to 82 °C; and c) cooling the alga to a temperature of about 25°C.

The alga according to the present invention is a *Laminariales* alga. *Laminariales* algae belong to the biological class *Phaeophyceae,* which are macro-algae. Any edible *Laminariales* alga can be used in the method according to the present invention. It is preferred that the *Laminariales* alga is of the family *Laminariaceae.* It is further preferred that the *Laminariales* alga is of the genus *Saccharina* or the genus *Laminaria.* Thus, the *Laminariales* alga can be e.g. selected from the genus *Saccharina,* such as from the group consisting of *Saccharina latissima,* and *Saccharina japonica.* Further, the *Laminariales* alga can be e.g. selected from the genus *Laminaria,* such as from the group consisting of *Laminaria hyperborea* und *Laminaria digitata.* The species *Saccharina latissima* is also known in the art as *Fucus saccharinus L.* and *Laminaria saccharina (L.)* or under the common names Zuckertang, sea belt and Devil's apron. *Saccharina latissima* has a particularly good taste and high levels of nutrients and trace elements. Therefore, it is particularly preferred that the *Laminariales* alga is a *Saccharina latissima* alga. Thus, in a preferred embodiment, the method for the treatment of a *Laminariales* alga comprises a1), optionally, heating the alga to a temperature of about 78°C in an aqueous solution; a2), optionally, cooling the alga to a temperature of about 30°C; a) mixing the alga with an aqueous solution comprising about 5 g/L calcium salt (e.g. about 5 g/L calcium citrate or about 5 g/L calcium carbonate) and/or about 50 g/L sodium chloride; b) incubating the mixture at a temperature of from about 78 to about 82 °C; and c) cooling the alga to a temperature of about 25°C, wherein the *Laminariales* alga is *Saccharina latissima.*

The method for treatment described herein renders the alga more compatible for the incorporation into food products, in particular for the incorporation into the food products described elsewhere herein. Specifically, the method for treatment is for rendering the alga more compatible for incorporation of the alga into a food product in an evenly distributed and/or stable manner. Preferably, the method for treatment is for rendering the alga more compatible for incorporation of the alga into a food product in a stable manner. Stability and distribution of the alga in the food product are described in more detail elsewhere herein.

Use of the singular "alga" herein is not meant to be limiting and, thus, includes the plural form where it is not explicitly indicated that a single alga is meant. Further, "alga" in the context of the present invention refers to entire alga as well as to alga pieces, such as pieces obtained after cutting.

The skilled person is aware of sources to obtain *Laminariales* alga for use in the present methods. For example, *Laminariales* alga may be harvested from their natural environment or from saltwater hydrocultures.

Methods for the harvest of *Laminariales* algae are also well known in the art and include harvesting by cutting, such as by manual or automatic cutting of the alga.

After harvest of the *Laminariales* alga, the alga may be stored before use in the treatment method further described herein. Storage of the alga may be at freezing conditions, such as at a temperature of about -20 °C (such as at -23 °C) or -1°C. Preferably, the *Laminariales* alga used in the methods described herein has been stored by freezing. The freeze-stored alga is preferably thawed before the first step of treatment with the method of the present invention. Alternatively, storage of the alga may also be at cooling conditions, such as at a temperature of between about 1°C and about 10°C. Thus, the *Laminariales* alga is conveniently available for treatment in the described methods regardless of whether it is harvest time or not. Naturally, the alga may also be used in the described methods directly after harvest without storage.

The alga can, but need not, be washed before storage or use in the present methods. Nevertheless, in preferred embodiments, the alga will be cleaned before use in the methods of the present invention (i.e. before or after storage). "Cleaning" comprises *inter alia* the rinsing with or in water as well as the removal of smaller sea animals, such as barnacles or snails. For example, the alga may be manually controlled for the presence of such smaller animals and other defects and the defects may be removed by excising the respective parts of the alga.

The method for the treatment of *Laminariales* alga, comprises optionally a heating step a1). Moreover, the method for the treatment of *Laminariales* alga, comprises a mandatory incubation step b), which is also termed "heating step" herein. In these heating steps the alga is heated to a temperature of above 60°C. For example, the alga is heated to a temperature of above 60°C, above 65°C, above 70°C, above 75°C, above 80°C, or above 85°C. It is preferred that the alga is heated to a temperature of above 70°C, more preferably to a temperature of above 75°C. Thus, the alga is heated to a temperature of from about 60°C to about 100°C, from about 65°C to about 95°C, from about 70°C to about 90°C, from about 75°C to about 85°C. Preferably, the alga is heated to a temperature of from about 70°C to about 90°C. More preferably, the alga is heated to a temperature of from about 75°C to about 85°C. In other words, the alga is heated to a temperature of about 60°C, about 65°C, about 70°C, about 75°C, about 76°C, about 77°C, about 78°C, about 79°C, about 80°C, about 81°C, about 82°C, about 83°C, about 84°C, about 85°C, about 90°C, about 95°C, or about 100°C. All of these alternative temperatures and temperature ranges apply to heating step a1) as well as heating/incubation step b).

Preferably, the alga is heated to the temperature of 78°C in step a1). The heating step ensures that bacteria that may have been present in the alga are eliminated. Additionally, the heating step reduces the concentration of iodine in the alga, whereby the iodine concentration is reduced to a level that is recommended by the German Association for Nutrition. The temperatures used in the heating steps and described above are termed the "heating temperatures" herein.

For heating in steps a1) and step b), any standard method known in the art can be used. For example, heating can be in a boiler (such as in a rapid pressurized boiler), pot, with an immersion heater, or in a cooking kettle (e.g. a cooking kettle of the Korimat MetallwarenfabrikGmbH). Throughout the methods described herein, any standard kitchen appliances, in particular appliances for large kitchens, may be used.

Heating step a1) is performed in an aqueous solution. For example, the alga can be transferred to an aqueous solution after thawing. Preferably, the alga is added to the aqueous solution already having the heating temperature described elsewhere herein. Alternatively, the alga may be added to the aqueous solution before heating and the alga-containing solution is subsequently heated to the heating temperature described elsewhere herein.

Heating in steps a1) and/or b) is for at least 10 sec, at least 20 sec, at least 30 sec, at least 40 sec, at least 50 sec, at least 1 minute, at least 2 minutes, at least 3 minutes or at least 4 minutes. This means that the heating temperature described elsewhere herein is maintained for this time span. Preferably, heating is for at least 1 min. More preferably, heating is for at least 3 min. In other words, heating is for about 10 sec, for about 20 sec, for about 30 sec, for about 40 sec, for about 50 sec, for about 1 min, for about 2 min, for about 3 min, for about 4 min, for about 5 min, for about 10 min, or longer. Preferably, heating is for about 4 min. In still other words, heating is from 10 sec to 20 min, from 1 min to 15 min, or from 3 min to 10 min. Preferably, heating is from 1 min to 15 min. All of these alternative time spans apply to heating step a1) as well as heating step b). Thus, preferably, heating in step a1) is from 1 min to 15 min, more preferably for about 4 min. Also, preferably, heating in step b) is from 1 min to 15 min, more preferably for about 4 min.

It is known in the art that heating of brown algae leads to a change in the brown color to green. Thus, in a preferred embodiment, the *Laminariales* alga has a green color after step a1). In a further preferred embodiment, the Laminariales alga has a green color after step b). In this embodiment, the alga may, e.g., be heated until a green color is obtained (i.e. the alga has a green color).

Suitable aqueous solutions for use in step a1) and a) are known in the art. In a preferred embodiment of the invention, the aqueous solution in step a1) is water. However, the aqueous solution of step a1) and/or step a) may also comprise further ingredients, such as buffers, stabilizers and the like. For example, the aqueous solution in step a1) may be tap water.

The concentration of the alga in the aqueous solution of steps a1) and/or a) will be such that the alga is entirely covered by the solution. For example, it has been shown that this can be achieved with 5 kg alga in a volume of 20 1 aqueous solution, i.e. 250 g/L. Thus, the concentration of the alga in the aqueous solution of step a1) and/or a) is from 0.1 g/L to 5000 g/L, such as from 1 g/L to 2500 g/L, preferably from 10 g/L to 1000 g/L, more preferably from 50 g/L to 500 g/L. Thus, the alga can have a concentration of about 10 g/L, about 50 g/L, about 100 g/L, about 250 g/L, about 500 g/L, or about 1000 g/L. In one embodiment, the concentration of the alga is for example, about 250 g/L alga. In other words, the concentration of the alga can be less than about 1000 g/L, preferably less than 500 g/L, more preferably less than 300 g/L. However, it is evident that the concentration of the alga in the solution may also be higher, as long as the alga is covered by the solution. All of these alternative concentrations apply to the aqueous solutions of step a1) as well as step a).

The method for the treatment of *Laminariales* alga further comprises an optional step a2) and a mandatory step c) wherein the alga is cooled to a temperature of from 15°C to 45°C, preferably from 15°C to 35°C, from 20°C to 40°C, preferably 20°C to 30°C, more preferably from 25°C to 35°C. In other words, the alga is cooled to a temperature of about 15°C, about 20°C, about 25°C, about 26°C, about 27°C, about 28°C, about 29°C, about 30°C, about 31°C, about 32°C, about 33°C, about 34°C, about 35°C, about 40°C, or about 45°C.

In a preferred embodiment, the alga is cooled to a temperature of from 20°C to 40°C in step a2). In a further preferred embodiment, the alga is cooled to a temperature of from 25°C to 35°C, such as about 30°C in step a2). In one embodiment, the alga is cooled to a temperature of from 15°C to 35°C in step c). It is further preferred that the alga is cooled to a temperature of from 20°C to 30°C, such as about 25°C in step c).

In a preferred embodiment, cooling is shock-cooling, preferably shock-cooling to about 30°C. Shock-cooling means that the temperature is rapidly decreased. The cooling step, and in particular shock-cooling, ensures that the vitamins comprised in the alga are preserved.

Suitable cooling methods for the cooling in steps a2) and c) are well known in the art. For example, cooling may be under running cold water, by pulling the alga through cold water or by transferring the alga to cold water. Preferably, the cooling is under running cold water. In these embodiments, the alga is removed from the aqueous solution before cooling. "Cold water" is water that has a temperature that is at or below the temperature to which the alga should be cooled. Preferably, cold water has a temperature of below 40°C, below 35°C, below 30°C, or below 25°C; more preferably, below 20°C, below 15°C, below 10°C, or below 5°C. For example, the cold water can have a temperature of from 0.5°C to 30°C, preferably from 1°C to 15°C, more preferably from 5°C to 10°C. It is particularly preferred that the cold water has a temperature of from 1°C to 15°C. In other words, the cold water has a temperature of about 1°C, about 2°C, about 3°C, about 4°C, about 5°C, about 6°C, about 7°C, about 8°C, about 9°C, about 10°C, about 11°C, about 12°C, about 13°C, about 14°C, or about 15°C. In a preferred embodiment, the cold water has about 7°C. "Water" for cooling is e.g. tap water and can thus comprise salts and the like. It is particularly preferred that cooling of the alga in step a2) is shock-cooling of the alga, such as under (running) water having preferably a temperature of from 0°C to 15°C, such as about 7°C. It is further particularly preferred that cooling of the alga in step c) is shock-cooling of the alga, such as under (running) water having preferably a temperature of from 0°C to 15°C, such as about 7°C.

The method for the treatment of *Laminariales* alga comprises a step a) wherein the alga is mixed with an aqueous solution comprising calcium salt and/or sodium chloride. Calcium salts (in particular calcium salts that comprise a carbon-containing anion, such as a citrate or carbonate anion) and sodium chloride change the surface structure of the alga in a manner that renders the alga suitable for the incorporation into food products. Specifically, after treating the alga according to the method of the present invention, the alga surface is no longer glibbery, but rough. After treatment, the surface looks tarnished and rough. Presumably, the calcium salt and sodium chloride influence (i.e. disintegrate) the surface alginate produced by the alga.

The calcium salt according to the present invention comprises a calcium cation (Ca²⁺). Additionally, the calcium salt according to the present invention comprises an anion, which is preferably a carbon-containing anion. "Carbon" in the context of the present invention means the chemical element carbon. Thus, in other words, the calcium salt comprises a carbon atom-containing anion.

Preferably, the carbon-containing anion comprises carbon in the form of a C(O)OH moiety (which is in some instances referred to as carboxyl group) or a derivative thereof. A derivative of a C(O)OH moiety is e.g. an anion thereof, such as C(O)O⁻ (which is in some instances referred to as carboxylate). Thus, more preferably, the carbon-containing anion comprises carbon in the form of a C(O)O⁻ moiety.

It has been found by the present inventors that the alga treatment is particularly effective when calcium citrate and/or calcium carbonate are used. Therefore, in a particularly preferred embodiment, the carbon-containing anion is at least one selected from the group consisting of citrate and carbonate. Both of these comprise carbon in the form of a C(O)O⁻ moiety. In other words, in a preferred embodiment, the calcium salt is at least one selected from the group consisting of calcium citrate and calcium carbonate. Preferably, the calcium salt is calcium carbonate. More preferably, the calcium salt is calcium citrate.

The aqueous solution of step a) is preferably water (such as tap water). This does not exclude that the aqueous solution may comprise further ingredients, such as further salts, buffers, solvents, additives and the like.

The aqueous solution of step a) comprises calcium salt and/or sodium chloride. Preferably, the aqueous solution of step a) comprises calcium salt and sodium chloride. However, the aqueous solution may expressly comprise calcium salt but no sodium chloride. Alternatively, it may comprise sodium chloride but no calcium salt. In a preferred embodiment, the aqueous solution of step a) comprises calcium salt. In a particular preferred embodiment, the aqueous solution of step a) comprises sodium chloride.

As outlined above, calcium carbonate and calcium citrate are particularly preferred calcium salts. Thus, the aqueous solution of step a) can comprise calcium citrate, calcium carbonate and/or sodium chloride. For example, the aqueous solution of step a) can comprise calcium citrate and/or sodium chloride. In one embodiment, the aqueous solution of step a) comprises (i) a calcium salt selected from the group consisting of calcium citrate and calcium carbonate; and (ii) sodium chloride. Preferably, the aqueous solution of step a) is water comprising calcium carbonate and sodium chloride. More preferably, the aqueous solution of step a) is water comprising calcium citrate and sodium chloride. However, the aqueous solution may expressly comprise calcium citrate and/or calcium carbonate but no sodium chloride. Alternatively, it may comprise sodium chloride but no calcium citrate or calcium carbonate. In a preferred embodiment, the aqueous solution of step a) comprises calcium citrate. In another embodiment, the aqueous solution of step a) comprises calcium carbonate. In a particular preferred embodiment, the aqueous solution of step a) comprises sodium chloride.

The calcium salt may be in a concentration of from about 0.001 g/L to about 950 g/L, such as from 0.1 g/L to 50 g/L, such as from 0.5 g/L to 25 g/L, preferably from 1 g/L to 15 g/L, more preferably from 2.5 g/L to 10 g/L, still more preferred from 3 g/L to 7 g/L. For example, calcium salt may be in a concentration of from 0.001 g/L to about 950 g/L. Preferably, the aqueous solution of step a) comprises calcium salt in a concentration of from 0.1 g/L to 50 g/L. More preferably, the aqueous solution of step a) comprises calcium salt in a concentration of from 1 g/L to 15 g/L. Thus, the calcium salt will be in a concentration of about 0.1 g/L, about 0.5 g/L, about 1 g/L, about 2 g/L, about 3 g/L, about 4 g/L, about 5 g/L, about 6 g/L, about 7 g/L, about 8 g/L, about 9 g/L, about 10 g/L, about 15 g/L, about 20 g/L, about 25 g/L, or about 50 g/L. Preferably, the aqueous solution comprises calcium salt in a concentration of about 5 g/L. In other words, the calcium salt may be in a concentration of from about 0.1 mM to about 1.9 M, from about 0.2 mM to about 100 mM, such as from about 1 mM to about 50 mM, preferably from about 2 mM to about 30 mM, more preferably from about 5 mM to about 20 mM, still more preferred from about 6 mM to about 14 mM. For example, the calcium salt may be in a concentration of from 0.1 mM to 1.9 M. Preferably, the aqueous solution of step a) comprises calcium salt in a concentration of from about 2 mM to about 30 mM. More preferably, the aqueous solution of step a) comprises calcium salt in a concentration of about 6 mM to about 14 mM. Thus, the calcium salt will be in a concentration of about 0.2 mM, about 1 mM, about 2 mM, about 4 mM, about 6 mM, about 8 mM, about 10 mM, about 12 mM, about 14 mM, about 16 mM, about 18 mM, about 20 mM, about 30 mM, about 40 mM, about 50 mM, or about 100 mM. Preferably, the aqueous solution comprises calcium salt in a concentration of about 10 mM.

When calcium citrate is used in the method of the invention, calcium citrate may be in a concentration of from about 0.05 g/L to about 950 g/L, 0.1 g/L to 50 g/L, such as from 0.5 g/L to 25 g/L, preferably from 1 g/L to 15 g/L, more preferably from 2.5 g/L to 10 g/L, still more preferred from 3 g/L to 7 g/L. For example, calcium citrate may be in a concentration of from 0.05 g/L to about 950 g/L. Preferably, the aqueous solution of step a) comprises calcium citrate in a concentration of from 1 g/L to 15 g/L. More preferably, the aqueous solution of step a) comprises calcium citrate in a concentration of from 3 g/L to 7 g/L. Thus, the calcium citrate will be in a concentration of about 0.1 g/L, about 0.5 g/L, about 1 g/L, about 2 g/L, about 3 g/L, about 4 g/L, about 5 g/L, about 6 g/L, about 7 g/L, about 8 g/L, about 9 g/L, about 10 g/L, about 15 g/L, about 20 g/L, about 25 g/L, or about 50 g/L. Preferably, the aqueous solution comprises calcium citrate in a concentration of about 5 g/L.

When calcium carbonate is used in the method of the invention, calcium carbonate may be in a concentration of from about 0.001 g/L to about 10 g/L, such as from about 0.1 g/L to about 5 g/L, preferably from about 0.2 g/L to about 3 g/L, more preferably from about 0.5 g/L to about 2 g/L, still more preferred from about 0.6 g/L to about 1.4 g/L; also, the calcium carbonate may be in a concentration from about 0.05 g/L to about 950 g/L, 0.1 g/L to 50 g/L, such as from 0.5 g/L to 25 g/L, preferably from 1 g/L to 15 g/L, more preferably from 2.5 g/L to 10 g/L, still more preferred from 3 g/L to 7 g/L. Preferably, the aqueous solution of step a) comprises calcium carbonate in a concentration of from about 0.2 g/L to about 3 g/L. More preferably, the aqueous solution of step a) comprises calcium carbonate in a concentration of about 0.6 g/L to about 1.4 g/L. Thus, the calcium carbonate will be in a concentration of about 0.02 g/L, about 0.1 g/L, about 0.2 g/L, about 0.4 g/L, about 0.6 g/L, about 0.8 g/L, about 1 g/L, about 1.2 g/L, about 1.4 g/L, about 1.6 g/L, about 1.8 g/L, about 2 g/L, about 3 g/L, about 4 g/L, about 5 g/L, or about 10 g/L. Preferably, the aqueous solution comprises calcium carbonate in a concentration of about 1 g/L. More preferably, the aqueous solution comprises calcium carbonate in a concentration of about 5 g/L.

Sodium chloride may be in a concentration of from 1 g/L to 500 g/L, such as from 5 g/L to 250 g/L, preferably from 10 g/L to 150 g/L, more preferably from 25 to 100 g/L, still more preferred from 30 g/L to 70 g/L. Preferably, the aqueous solution of step a) comprises sodium chloride in a concentration of from 10 g/L to 150 g/L. More preferably, the aqueous solution of step a) comprises sodium chloride in a concentration of from 30 g/L to 70 g/L. Thus, the sodium chloride will be in a concentration of about 1 g/L, about 5 g/L, about 10 g/L, about 20 g/L, about 30 g/L, about 40 g/L, about 50 g/L, about 60 g/L, about 70 g/L, about 80 g/L, about 90 g/L, about 100 g/L, about 150 g/L, about 200 g/L, about 250 g/L, about 500 g/L. Preferably, the aqueous solution comprises sodium chloride in a concentration of about 50 g/L.

It will be understood that the solubility of the calcium salts as well as the sodium chloride in the aqueous solution depends on different factors such as temperature, composition of the solution, concentration of other ingredients, and the like. These factors therefore also influence the maximal concentration of a solute in a solution (the saturation concentration). Methods for the determination of the saturation concentration of a solute in a given solution are known in the art. Hence, it will be understood that the concentration of the calcium salt (such as calcium citrate and/or calcium carbonate) and/or the sodium chloride is at or below its saturation concentration in the aqueous solution of step a).

Sodium chloride may be in the form of pure salt, such as substantially pure sodium chloride. However, it is preferred that the sodium chloride is added in the form of rock salt, which is also known as halite. Rock salt (halite) has the advantage that it has a particular good image among certain consumer groups, and may, thus, positively influence the market value of the final product. For example, rock salt is thought to be free of remnants of industrial salt refinery. In this embodiment, the alga is mixed with an aqueous solution comprising calcium salt (such as e.g. calcium citrate and/or calcium carbonate) and/or rock salt in step a). It is particularly preferred that the alga is mixed with an aqueous solution comprising calcium citrate and rock salt in step a). Rock salt comprises mainly sodium chloride. Therefore, the concentrations outlined above for sodium chloride also apply for the rock salt. For example, the aqueous solution may comprise from 1 g/L to 500 g/L, such as from 5 g/L to 250 g/L, preferably from 10 g/L to 150 g/L, more preferably from 25 to 100 g/L, still more preferred from 30 g/L to 70 g/L rock salt (halite). Preferably, the aqueous solution of step a) comprises rock salt in a concentration of from 10 g/L to 150 g/L. More preferably, the aqueous solution of step a) comprises rock salt in a concentration of from 30 g/L to 70 g/L.

"Mixing" of the alga with the aqueous solution comprising calcium salt (such as calcium citrate and/or calcium carbonate) and/or sodium chloride in step a) may be by any means known in the art. For example, mixing may be by stirring or by simply putting the alga into the solution. Preferably, mixing is by stirring. Mixing ensures that the aqueous solution of step a) efficiently moistens the entire alga surface.

As already outlined elsewhere herein, the method for the treatment of *Laminariales* alga comprises further a heating/incubation step b) wherein the mixture is incubated at a temperature of above 60°C. The "mixture" refers to the solution comprising alga, calcium salt (such as calcium citrate and/or calcium carbonate) and/or sodium chloride that is obtained in step a).

The temperature in step b) may be a heating temperature or a heating temperature range as defined elsewhere herein for optional step a1) and mandatory step b). In particular, it is preferred that the mixture is incubated at a temperature of from about 75°C to about 85°C, more preferably at a temperature of from about 78°C to about 82°C in step b).

Incubation time in step b) is as described elsewhere herein in detail. Preferably, heating in step b) is for about 4 min. In consequence, the present invention provides in a particularly preferred embodiment a method for the treatment of a *Laminariales* alga, comprising a) mixing the alga with an aqueous solution comprising about 10 mM calcium salt (such as about 5 g/L calcium citrate or about 1 g/L calcium carbonate) and/or about 50 g/L sodium chloride; b) incubating the mixture at a temperature of from 78 to 82 °C for about 4 min; and c) cooling the alga to a temperature of about 25°C. In a further preferred embodiment, the method for the treatment of a *Laminariales* alga comprises a1) heating the alga to a temperature of about 78°C in an aqueous solution for about 4 min; a2) cooling the alga to a temperature of about 30°C; a) mixing the alga with an aqueous solution comprising about 10 mM calcium salt (such as about 5 g/L calcium citrate or about 1 g/L calcium carbonate) and/or about 50 g/L sodium chloride; b) incubating the mixture at a temperature of from 78 to 82 °C for about 4 min; and c) cooling the alga to a temperature of about 25°C.

Finally, the method for the treatment of *Laminariales* alga comprises further a step c) wherein the alga is cooled to a temperature of from 10°C to 40°C. Cooling may be by means and to temperatures as described elsewhere herein for steps a2) and c). Preferably, cooling in step c) is to a temperature of about 25°C. This step ensures again that vitamins comprised in the alga are preserved. It is preferred that cooling of the alga in step c) is shock-cooling of the alga, such as under (running) water having preferably a temperature of from 0°C to 15°C, such as about 7°C.

After step c) the alga may be stored before use as an ingredient in a food product. For storage, the alga may be frozen, cooled or dried. Preferably, the alga is cooled or frozen. Freezing may be e.g. at a temperature from about -23 to about -4°C, e.g., at about -20°C or at about about -4°C. Drying may be air-drying, e.g. on a leash, by blot drying and/or by heating at about e.g. 60°C. Drying will lead to the sweet taste that is typical for the alga (Zuckertang). For storage and transport the alga may be vacuumized.

In another aspect, the present invention provides a method for the manufacture of an alga-containing food product, comprising a) treating a *Laminariales* alga according to the method of the present invention; and b) adding the treated alga to a food product. As outlined elsewhere herein, the *Laminariales* alga is preferably of the genus *Saccharina,* more preferably of the species *Saccharina latissima.*

The treatment of *Laminariales* alga described herein yields alga that have the advantageous property that they will not migrate to the margin of the food product. This is particularly true for food products that are liquid or viscous during the process of manufacture and solidify into a more viscous or solid product because usually, migration of the alga will happen during the solidifying process. "Viscous" includes chunky masses, such as those that will be generated during the manufacture of sausages or vegetarian sausages. Thus, in a preferred embodiment, the food product is a food product that solidifies during the process of its manufacture. Additionally or alternatively, the food product may be a food product in which the cohesiveness increases during the manufacturing process (such as in sausages or vegetarian sausages).

In the food products according to the present invention, the alga is inside the food product, i.e. comprised in the part of the food product that solidifies during the process of its manufacture and/or in the part of the food product in which the cohesiveness increases during the manufacturing process. This means that the alga does not merely surround or wrap these parts of the food product.

The food product is, preferably selected from the group consisting of dairy products, vegetarian meat-like (meat substitute) products, pastry goods, sweets, and jams. All of these food products solidify during the process of their manufacture.

It is particularly preferred that the food product is a dairy product selected e.g. from the group consisting of cheese, curd (quark), yoghurt, butter and the like. In a preferred embodiment, the food product is a cheese. The cheese may be a hard or a soft cheese. For example, the cheese may be a soft cheese, such as a Camembert, or a hard cheese. It is preferred that the cheese is a raw milk cheese. In a further preferred embodiment, the food product is a yoghurt, such as a set-type yoghurt.

It is further preferred that the food product is a vegetarian meat-like (meat substitute) product selected e.g. from the group consisting of vegetarian sausages, vegetarian burgers, vegetarian patties, vegetarian "meat" balls, and the like. Such vegetarian meat-like products may comprise e.g. grain (such as wheat, rye, rice and the like), tofu, seitan and the like. Vegetarian sausages include substitutes for wiener, bratwurst, curried sausages and the like.

The food product may also be a meat product, i.e. a non-vegetarian, meat-comprising product. The meat product can be selected from the group consisting of sausages, burgers, patties, meat balls, and the like. Sausages include wiener, bratwurst, curried sausages and the like.

The food product may also be a pastry good e.g. selected from the group consisting of bread, rolls, cookies, and the like. Moreover, the food product may be a sweet, such as a jelly sweet or a chocolate sweet. Jelly sweets are sweets comprising a gelling agent such as gelatin or agar agar. Examples for jelly sweets that can be manufactured by the method of the present invention are e.g. gummi bears. Examples for chocolate sweets are filled chocolates.

It is evident that the food product can be any food product comprising gelling agents such as gelatin, agar agar or sugar. Thus, the food product may also be a jam, such as strawberry jam.

Before adding the treated alga to the food product in step b), the alga can be cut into smaller pieces. Alternatively, the treated alga may be added to the food product in step b) and the food product and alga can be cut afterwards together. Cutting can e.g. be performed manually or with a semi-automatic or automatic cutter.

The food product may be a human food product (i.e. a food product for human use) or an animal or pet food product. Preferably, the food product is for human use.

Addition of the alga to the food product may be by any suitable means known in the art. For example, the addition may include mixing of the alga and the food product. The addition time and means will be adapted to the process of manufacture of the food product. The alga is added in step b) before the solidification process of the food product is completed. Additionally or alternatively, the alga is added in step b) before the cohesiveness of the food product does prevent intermixing of food product and alga. Specifically, the alga is added while the food product is not yet solid and/or entirely cohesive, i.e. is liquid or viscous (e.g. in the case of dairy products) or a chunky mass (e.g. in the case of sausage and vegetarian sausage products). The treated alga will be added to the food product at a time during the manufacturing process at which the product and the treated alga can still be readily mixed by stirring or folding in.

For example, in case the food product is cheese, the alga can be added to the cheese curd that separated from the whey as long as the curd is not too solid to take up the alga. Preferably, the algae are added after whey separation has started.

In another aspect, the present invention concerns a *Laminariales* alga that is treated by the method according to the invention. The treated *Laminariales* alga differs from untreated *Laminariales* alga (fresh *Laminariales* alga) in that it has a rougher surface (leading to a tarnished visual appearance). In short, the treated *Laminariales* alga does not have a glibbery surface.

In another aspect, a food product comprising *Laminariales* alga is provided. In one embodiment, the food product comprises *Saccharina latissima.* As described elsewhere herein, the food product is preferably a food product that solidifies during the process of its manufacture. Thus, the food product is e.g. not a salad. Examples for food products are described elsewhere herein.

In another related aspect, the invention provides a food product comprising *Laminariales* alga, wherein the (initial) distribution of the alga in the food product remains/is stable. The food product may be any of the food products defined elsewhere herein. The distribution of the alga in particular remains/is stable after mixing of alga and food product. Thus, the distribution of the alga remains/is stable during the solidification of the product and/or while the product cohesiveness increases during the manufacture of the product. For example, the distribution remains/is stable during ripening, and/or drying of the product during the manufacture of the product. Moreover, the distribution of the alga remains/is stable during storage.

In one embodiment, the food product according to the present invention comprises *Laminariales* alga, wherein the (initial) distribution of the alga in the food product remains/is stable and wherein further the *Laminariales* alga are substantially evenly distributed.

In preferred embodiments of the food product aspects described above, the invention provides a food product comprising substantially evenly distributed *Laminariales* alga. The food product may be any of the food products defined elsewhere herein. "Substantially evenly distributed" is to be understood as an alga distribution, wherein the alga density and/or concentration are/is substantially the same in different parts of the food product. For example, the alga will be present in the centre of the food product and at the margins of the food product in substantially the same concentration.

The distribution of the alga is considered to be "stable" when the position of the alga in the food product does substantially not change after the alga has been intermixed with the remaining ingredients of the food product and the food product has been given its desired shape. The desired shape is the shape intended for sale. This does not exclude that the food product may undergo a ripening or drying process after having been given its desired shape. For example, when the food product is vegetarian sausage, the position of the alga in the vegetarian sausage will substantially not change after it has been intermixed with the further sausage ingredients and pressed into a skin.

It will be understood that the food product contains alga pieces, rather than entire brown alga. Thus, "alga" in the context of the food products described herein refers to alga pieces. As described elsewhere herein, the alga pieces may be obtained by cutting the alga. The pieces in the food product will have a size that is adapted to the respective food product. For example, the alga pieces in the food product can have a size of about 0.1 cm² about 0.5 cm² about 1 cm², about 5 cm² about 10 cm², or about 25 cm². In other words, the alga pieces in the food product can have a size of from 0.1 cm² to 25 cm², from 0.1 cm² to 10 cm² or from 0.1 cm² to 5 cm².

"Storage" may be for several weeks, months, or years, depending on the shelf life of the food product. The distribution of the alga will remain stable in the (solidified) food product for the entire shelf life of the food product. Thus, it is preferred that the storage is for the duration of the shelf life of the food product. For example, the distribution of the alga will remain stable for at least a week, at least a month or at least a year, or more during storage. In other words, storage will be for at least a week, at least a month, at least 8 weeks, at least a year, or more. Preferably, the distribution of the alga will remain stable for at least 8 weeks, i.e. storage is at least 8 weeks.

Storage will usually be from 1°C to 10°C, such as about 4°C to about 8°C, in the dark. Alternatively, storage of the food product can also be in frozen form, such as at temperatures of from -4°C to -25°C.

Further provided is a food product obtainable by the method for manufacture of food products described herein. The food product will have the characteristics of even alga distribution and distribution stability described elsewhere herein. The food product may be any of the food products defined elsewhere herein.

In another aspect, the invention relates to the use of a *Laminariales* alga for the preparation of a food product, wherein the alga is treated by the treatment method described herein during the preparation. The food product may be any of the food products defined elsewhere herein.

### SHORT DESCRIPTION OF THE FIGURES

- **Figure 1**: shows a *Saccharina latissima* alga after treatment with the method according to the present invention.
- **Figure 2**: shows a cross section of a vegetarian curry sausage manufactured according to a method of the present invention. It can be seen that the treated *Saccharina latissima* algae (darker parts) are distributed stably all over the cross section of the sausage.

### EXAMPLES

### Example 1: Treatment of Saccharina latissima

Fresh *Saccharina latissima* algae were obtained from sea water hydroculture and frozen immediately after harvest. The algae were then stored at temperatures between -23°C and -1°C.

Immediately before use, 5 kg fresh algae were thawed at room temperature. The algae were rinsed and manually checked for snails and barnacles. Any snails or barnacles or the like were removed, e.g. by cutting off parts from the algae that were affected.

20 liters water were heated to 78°C. 5 kg fresh algae were incubated for 4 minutes in the heated water. Subsequently, the algae were cooled for 1 minute under running 7°C water to 30°C.

After that a new batch of 20 liters water was heated to between 78°C to 82 °C. 100 g calcium citrate intermixed with 1 kg rock salt (common salt) was added to the heated water. The mixture was stirred until the calcium citrate and the rock salt was dissolved completely. The 5 kg algae were then added to the heated solution and incubated for 4 minutes. After that, the algae are removed from the solution and cooled to 25°C under 7°C cold running water. The cool, treated algae were then stored at 4°C until further use.

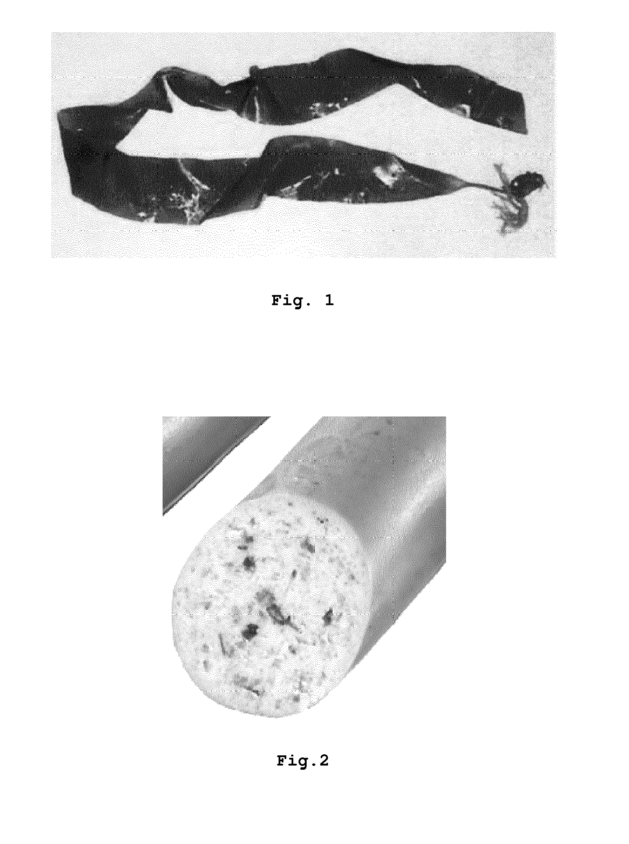

An example of one of the treated *Saccharina latissima* algae is shown in Figure 1. It can be seen that the alga has a relatively rough and dull/tarnished surface (in comparison with fresh algae which are usually highly glibbery).

### Example 2: Manufacture of alga-containing cheese

### 1. Hard cheese

Hard cheese was manufactured according to standard methods in the art. The treated algae from Example 1 were added to the curd mass and mixed. The cheese was then subjected to the usual ripening process and subsequently stored at 4-7°C.

Upon cutting the finished hard cheese, it was seen that the alga are evenly distributed throughout the cheese (data not shown).

### 2. Soft Cheese (camembert)

Soft cheese (camembert with fermented milk and quark) was manufactured according to standard methods in the art. The treated algae from Example 1 were added to the mass and mixed. The cheese was then subjected to the usual ripening process and subsequently stored at 4-7°C.

Upon cutting the finished soft cheese, it was seen that the alga are evenly distributed throughout the cheese (data not shown).

### Example 3: Manufacture of alga-containing vegetarian sausage

Vegetarian curry sausage was manufactured according to standard procedures known in the art.

For the sausage, *Saccharina latissima* alga was substantially treated as described in example 1, except that the mixture (of step a) as described elsewhere herein) only contained rock salt and no calcium citrate.

After treatment, the algae were added to and mixed with a composition comprising the following further ingredients for the vegetarian sausage:
Water, rapeseed oil, whole-grain wheat and rye flour, rice flour, egg protein, paprika, onion, carrots, modified starch, maltodextrin, salt, spices, and curry.

The mixture was then cuttered and filled into cellulose casings. Subsequently, the vegetarian sausages were scalded. Finally, the cellulose casings were removed again.

The pieces of treated *Saccharina latissima* algae are distributed stably all over the vegetarian sausage as can be seen from the cross section of a sausage shown in Figure 2.

### Example 4: Treatment of Saccharina latissima with calcium carbonate

To test further calcium salts, in particular calcium carbonate, for their suitability in the treatment of brown algae, alga were treated substantially as described in Example 1. In particular, 100 g calcium carbonate (instead of calcium citrate) intermixed with 1 kg rock salt (common salt) was added to the 20 L heated water during the second heating step.

It was found that calcium carbonate was equally suitable for use in the treatment when it replaced the calcium citrate of Example 1. The treatment resulted in alga with a rough and dull/tarnished surface.

## Claims

1. Method for the treatment of a *Laminariales* alga, comprising
a) mixing the alga with an aqueous solution comprising from 0.1 g/L to 50 g/L calcium salt and/or from 1 g/L to 500 g/L sodium chloride;
b) incubating the mixture at a temperature of above 60°C; and
c) cooling the alga to a temperature of from 10°C to 40°C.

2. Method according to claim 1, wherein the calcium salt comprises a carbon-containing anion and is preferably at least one selected from the group consisting of calcium citrate and calcium carbonate.

3. Method according to any of claims 1 and 2, further comprising prior to step a)
a1) heating the alga to a temperature of above 60°C in an aqueous solution; and/or
a2) cooling the alga to a temperature of from 15°C to 45°C.

4. Method according to any of claims 1 to 3, wherein the alga is of the genus *Saccharina,* preferably of the species *Saccharina latissima.*

5. Method according to any of claims 1 to 4, wherein the concentration of the alga in the aqueous solution of step a1) and/or a) is from 0.0001 kg/L to 5 kg/L, preferably about 0.25 kg/L.

6. Method for the manufacture of an alga-containing food product, comprising
a) treating a *Laminariales* alga according to the method of any of claims 1 to 5; and
b) adding the treated alga to a food product.

7. Method according to claim 6, wherein the food product is preferably selected from the group consisting of dairy products, vegetarian meat-like (meat substitute) products, pastry goods, sweets, and jams.

8. Method according to any of claims 6 to 7, wherein the food product is a food product that solidifies during the process of its manufacture.

9. A *Laminariales* alga that is treated by the method according to any of claims 1 to 5.

10. Food product comprising *Laminariales* alga, wherein the food product is a food product that solidifies during the process of its manufacture and/or a food product in which the cohesiveness increases during the manufacturing process.

11. Food product comprising *Laminariales* alga, wherein the distribution of the alga in the food product remains stable.

12. Food product according to any of claims 10 to 11, comprising substantially evenly distributed *Laminariales* alga.

13. Food product obtainable by the method according to any of claims 6 to 9.

14. Food product according to any of claims 11 to 13, wherein the food product is selected from the group consisting of dairy products, vegetarian meat-like (meat substitute) products, pastry goods, sweets, and jams.

15. Use of a *Laminariales* alga for the preparation of a food product, wherein the alga is treated by the method according to any of claims 1 to 5 during the preparation.
